# EUROPÄISCHE PATENTSCHRIFT

(11) **EP 0 599 083 B1**
(45) Veröffentlichungstag und Bekanntmachung des Hinweises auf die Patenterteilung: **10.04.1996**
(21) Anmeldenummer: 93117569.9
(22) Anmeldetag: 29.10.1993
(51) Int. Cl.: G05D 3/00, F16K 31/05

(54) **Antriebseinheit zur Steuerung und Regelung von Armaturen od.dgl.**
Drive assembly for controlling or regulating valves or the like
Système d'entraînement pour commander ou réguler des vannes ou analogues

(30) Priorität: 27.11.1992 DE 4239947
(43) Veröffentlichungstag der Anmeldung: 01.06.1994
(73) Patentinhaber: Werner Riester GmbH & Co. KG Armaturen- und Maschinenantriebe, D-79379 Müllheim (DE)
(72) Erfinder:
(74) Vertreter: Patentanwälte Dipl.-Ing. Hans Schmitt Dipl.-Ing. Wolfgang Maucher

(56) Entgegenhaltungen:
- EP-A- 0 010 416
- DE-A- 2 817 307
- GB-A- 2 018 937
- US-A- 3 915 015
- US-A- 4 616 528

## Beschreibung

Die Erfindung betrifft eine Antriebseinheit mit einem Motor und einem Getriebe zur Steuerung und Regelung von Armaturen oder dergleichen, beispielsweise von Ventilen, Schiebern oder Klappen, wobei das Getriebe zwischen dem Motor und der Armatur angeordnet ist und wenigstens ein Hohlrad mit Innenverzahnung aufweist, das durch eine Verzahnung auf seiner Außenseite auch als Schneckenrad zum Zusammenwirken mit einer Schnecke eines Handradantriebes ausgebildet ist, mit dieser Schnecke in ständigem Eingriff steht und sich an dieser Schnecke durch Selbsthemmung abstützt bzw. während des Motorbetriebes festgehalten ist.

Derartige Antriebseinheiten sind bekannt und haben sich bewährt. Dabei besteht jedoch das Problem, daß der Motor automatisch oder selbsttätig abgeschaltet werden soll, wenn die Armatur eine zu große Gegenkraft beispielsweise durch Anstoßen an ein Hindernis erzeugt. Ferner kann erwünscht sein, eine Zunahme eines Drehmomentes im Getriebe festzustellen, um zum Beispiel Rückschlüsse auf Veränderungen in dem durch die Armatur fließenden Medium oder auf zunehmenden Verschleiß im Antrieb selbst zu ermöglichen.

Zu diesem Zweck ist es aus EP-A-0 010 416 und aus US-A-4 616 528 bereits bekannt, die mit einem Schneckenrad kämmende Schnecke in Axialrichtung verschieblich zu lagern und abzufedern, wobei ab einem bestimmten Verschiebeweg ein Endschalter oder ein Potentiometer oder ein induktiver Wegaufnehmer beaufschlagt werden.

Durch einen Endschalter kann nur ein einziger Schaltpunkt erfaßt werden. Durch einen Potentiometer können zwar auch Zwischenzustände erkannt werden, jedoch sind dazu relativ große Verstellbewegungen in beiden Richtungen an der Schnecke erforderlich- und zwar in der Größenordnung von Millimetern. Das gleiche gilt für Wegaufnehmer. Aus diesen Anordnungen ergibt sich eine indirekte Drehmomentmessung oder indirekte Kraftmessung, weil Federn erforderlich sind, gegenüber welchen die Schneckenwelle axial um einen genügend großen Weg auslenkbar sein muß, um je nach Größe dieser Auslenkung eine entsprechende Gegenkraft anzuzeigen.

Ein wesentlicher Nachteil solcher indirekt wirkenden Systeme besteht einerseits im dem schon erwähnten relativ großen Verschiebeweg und der Abhängigkeit von sich ändernden Federkonstanten zum Beispiel bei Alterung der Federn und andererseits vor allem darin, das beim Bruch einer Feder das Meßgerät eine zu große Gegenkraft anzeigt, weil eine entsprechend größere Verschiebung auftritt.

Ungünstig ist bei diesen vorbekannten Systemen außerdem, daß vielteilige Übertragungselemente von dieser verschieblichen Schneckenwelle auf entsprechende Meß- und Anzeige- sowie Steuergeräte erforderlich sind, die nicht nur durch die Vielteiligkeit aufwendig sind, sondern einen entsprechend großen Platzbedarf haben und aufgrund von Toleranzen und Reibungen zu Ungenauigkeiten führen können. Darüber hinaus sind diese Übertragungsteile ihrerseits einem Verschleiß unterworfen, daß diese Ungenauigkeiten im Laufe der Zeit entsprechend zunehmen.

Der Erfindung liegt deshalb die Aufgabe zugrunde, eine Antriebseinheit der eingangs genannten Art zu schaffen, bei welcher große Verschiebewege im Meßbereich vermieden werden, trotzdem zunehmende Widerstände zwischen Motorwelle und Abtrieb des Getriebes mit verbesserter Genauigkeit erfaßt werden und die dafür erforderliche Anzahl von Teilen und Übertragungsmitteln sowie Anzeigevorrichtungen vermindert wird.

Zur Lösung dieser Aufgabe ist die eingangs definierte Antriebseinheit dadurch gekennzeichnet, daß an der für den Handantrieb vorgesehenen, die Schnecke tragende Schneckenwelle eine membranartige Scheibe aus hartem Werkstoff in axialer Richtung an dieser festliegend angeordnet ist, wobei die Scheibe mit ihrem in radialer Richtung von der Schneckenwelle und der dortigen Befestigung abliegenden Außenumfang ebenfalls in axialer Richtung festliegend abgestützt oder fixiert ist, und daß auf wenigstens einer Seite der membranartigen Scheibe zumindest ein Dehnungsmeßstreifen appliziert ist.

Tritt während des Normalbetriebes der Antriebseinheit bei laufendem Motor eine Änderung des Drehmoments auf, ergibt sich im Bereich der Abstützung des außenverzahnten Hohlrades an der Schnecke eine entsprechende Änderung der Abstützkraft, die zu einer minimalen Verschiebung der Schneckenwelle führt. Dabei genügt schon das bei Wellenlagerungen nicht zu vermeidende Axialspiel, wobei dieses Spiel der Schneckenwelle in Axialrichtung wenigstens im Mikrometerbereich liegen kann. Eine solche äußerst geringfügige Verschiebung der Schneckenwelle im Mikrometerbereich führt bereits dazu, daß die membranartige Scheibe trotz des verwendeten harten Werkstoffes innerhalb ihrer Elastizitätsgrenze so verformt wird, daß der Dehnungsmeßstreifen anspricht. Bei Verbindung mit einer entsprechenden Auswerteelektronik können also geringste Verformungen der Scheibe aufgrund minimaler Axialverschiebungen der Schnecke oder der Schneckenwelle Meßwerte auf kürzestem Wege erlangt werden.

Zweckmäßig ist es dabei, wenn die membranartige Scheibe mit ihrem Außenumfang an der Innenseite des Getriebegehäuses für den Handantrieb gehalten ist. Dort läßt sich die Außenseite dieser Scheibe, deren Innenseite mit der Schneckenwelle fest verbunden ist, auf ebenso einfache Weise fixieren, um bei einer Relativbewegung zwischen Schneckenwelle und Getriebegehäuse die erwünschte Verformung der Scheibe und damit des oder der an ihr befindlichen Dehnungsmeßstreifen zu erhalten. Die Schneckenwelle für den Handantrieb kann also ein in ihrer axialen Erstreckungsrichtung wirkendes Spiel haben, ist aber mit der membranartigen Scheibe spielfrei und fest verbunden.

Der oder die Dehnungsmeßstreifen, in der Regel durch Verformung veränderbare Widerstände, können auf die Scheibe aufgedruckt und eingebrannt und mit der Auswerteelektronik verbunden sein. Dies läßt sich auf engstem Raum und mit geringem Platzbedarf besonders günstig realisieren, wenn die Scheibe insbesondere auf der Seite, auf welcher der oder die Dehnungsmeßstreifen angeordnet sind, einen Sockel oder dergleichen elektrisches Verbindungselement trägt, welches seinerseits eine Platine mit einer integrierten Verstärkerschaltung hält, die insbesondere parallel zu der Scheibe in geringem Abstand zu dieser angeordnet ist. Es kann also durch eine solche etwa parallel zu der membranartigen Meßscheibe angeordnete Platine mit einer gedruckten Verstärkerschaltung innerhalb des Handradgehäuses untergebracht sein, so daß es dafür praktisch keines zusätzlichen Platzes bedarf.

Da eine indirekte Messung über eine Wegmessung mit Hilfe von Federn vermieden wird, erlaubt die vorstehend geschilderte Erfindung bei Kombination einzelner oder mehrerer der schon erwähnten und der nachfolgend noch beschriebenen Merkmale und Maßnahmen, daß der mechanische Nullpunkt des gesamten Antriebs- und Meßsystemes mit dem Ausgangs-Nullpunkt der eigentlichen Meßvorrichtung in Übereinstimmung gebracht wird, so daß nach der Montage jede derart gestaltete Antriebseinheit präzise Meßwerte erlaubt.

Eine ganz besonders zweckmäßige Ausgestaltung der Erfindung von erheblicher Bedeutung, welche die Meßeinrichtung von äußeren Einflüssen weitestgehend unabhängig macht, kann darin bestehen, daß das Handrad in Drehrichtung mit der Schneckenwelle kuppelbar und in Gebrauchstellung verbunden, in axialer Richtung jedoch entkoppelt ist. Somit führen irgendwelche insbesondere in axialer Richtung wirkende Belastungen am Handrad nicht auf die membranartige Meß-Scheibe, so daß es sogar möglich ist, beispielsweise bei größeren Armaturen auf das Handrad zu treten, selbst wenn dieses und die daran angeschlossene Schneckenwelle mit vertikal orientierter Achse eingebaut sind, ohne daß dadurch das Meßergebnis verfälscht wird, weil eine solche Belastung des Handrades nicht auf die Schneckenwelle und somit auch nicht auf die membranartige Scheibe übertragen wird, denn schon geringste Verformungen des Dehnungsmeßstreifens aufgrund entsprechender Verformungen der Scheibe ergeben deutliche Widerstandsänderungen in dem entsprechenden Meßstromkreis und entsprechend deutliche Meßwerte.

Ausgestaltungen der Erfindung mit weiteren erheblichen Vorteilen für Meßgenauigkeit, Einfachheit der Herstellung und der Montage sowie platzsparende Anordnung sind Gegenstand der Ansprüche 8 bis 13.

Dabei enthalten die Ansprüche 8 und 9 Merkmale, wie das Handrad mit einem ihm zugehörenden Wellenstummel ausgestattet und im übrigen von der eigentlichen, durch das Handrad zu betätigenden Schneckenwelle in axialer Richtung abgekoppelt bleiben kann, trotzdem aber eine Verdrehung der Schneckenwelle mit Hilfe des Handrades erlaubt.

Anspruch 10 enthält eine Maßnahme, die die Halterung der Meßscheibe an ihrem Umfange verbessert und vor allem die Genauigkeit dieser Halterung erhöhen kann, so daß Fertigungstoleranzen keine nachteiligen Folgen haben und nachträgliche Verschmutzungen in diesem Bereich mit entsprechenden Gefahren für eine Verfälschung der Meßergebnisse vermieden werden können.

Die Ansprüche 11 und 12 enthalten Merkmale und Maßnahmen für eine konstruktive Ausgestaltung der Halterung vor allem des Außenbereiches der membranartigen Scheibe.

Anspruch 13 betrifft den Gehäusedeckel für den Handradantrieb und die dort vorgesehene Lagerung des von der Schneckenwelle entkoppelten Handrades.

In vorteilhafter Weise wird durch die erfindungsgemäße Antriebseinheit eine dauernde direkte Messung einer Gegenkraft ermöglicht und außerdem der Handradwelle eine zusätzliche Funktion gegeben. Normalerweise soll eine solche Handradwelle möglichst gar nicht gebraucht werden, da sie eigentlich nur für den Notfall vorgesehen ist. Durch die Erfindung erhält sie nun aber eine dauernde zusätzliche wichtige Aufgabe, nämlich die Messung der vom Abtrieb des Getriebes her aufgenommenen Gegenkraft und die Anzeige eventueller Änderungen dieser Gegenkraft. Gleichzeitig können dabei in vorteilhafter Weise nicht nur die Kräfte bei normalem Motorbetrieb, sondern auch die Gegenkräfte bei einem Notfall-Handbetrieb gemessen werden. Dabei werden all diese Vorteile mit sehr wenigen Teilen und bei äußerst geringem Platzbedarf erreicht.

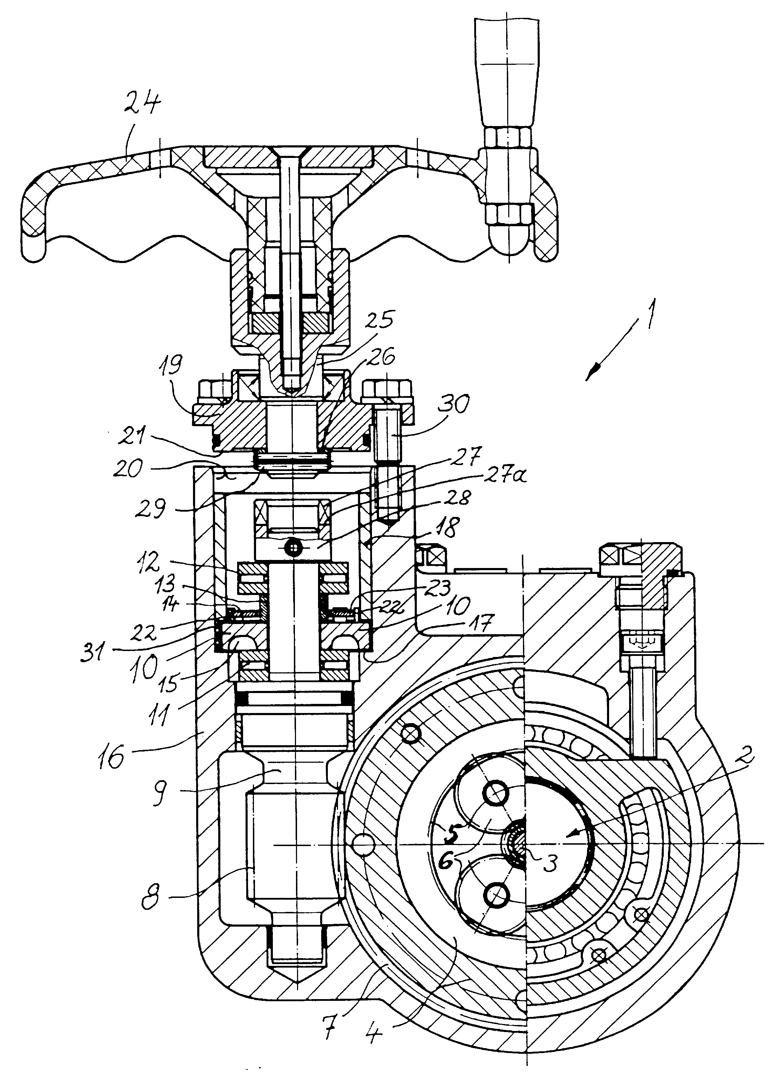

Nachstehend ist ein Ausführungsbeispiel der Erfindung anhand der Zeichnung näher beschrieben.

Die einzige Figur zeigt einen Längsschnitt durch den Handantrieb mit gleichzeitigem Querschnitt durch das Getriebe, welches zwischen Motor und anzutreibendem Teil angeordnet ist, im Bereich eines eine Außenverzahnung aufweisenden Hohlrades, welches mit einer Schnecke des Handradantriebes kämmt, wobei das in axialer Richtung von der Schneckenwelle entkoppelte, in Gebrauchsstellung in Drehrichtung mit dieser Schneckenwelle verbundene Handrad mit der Lagerung eines an ihm befindlichen Wellenstummels demontiert ist.

Eine im ganzen mit 1 bezeichnete Antriebseinheit, die zum Beispiel zur Steuerung oder Regelung von Armaturen oder dergleichen, beispielsweise von Ventilen, Schiebern oder Klappen dient, hat ein Getriebe 2 und einen in der Zeichnung nicht sichtbaren Motor, wobei sich das Getriebe 2 zwischen diesem Motor und der Armatur befindet.

Der Horizontalschnitt durch das Getriebe 2 ist in der Zeichnung zur einen Hälfte in einer anderen Ebene als in der zweiten Hälfte angeordnet. Dabei erkennt man in der dem noch zu erläuternden Handantrieb zugewandten Hälfte in der Mitte eine zentrale Welle 3, die von dem Motor beaufschlagt wird und dessen Abtriebswelle ist.

Ebenso erkennt man in diesem Schnitt ein Hohlrad 4 mit einer Innenverzahnung 5, an welchen wiederum auch mit der Welle 3 über Verzahnungen verbundene Zwischenzahnräder 6 kämmen.

Wesentlich ist jedoch an diesem Hohlrad 4 eine Verzahnung 7 auf seiner Außenseite, wodurch das Hohlrad 4 auch als Schneckenrad ausgebildet ist, damit es mit einer Schnecke 8 kämmen kann, wie es wiederum in der Zeichnung deutlich erkennbar ist. Mit dieser Schnecke 8 befindet sich das Hohlrad 4 in ständigem Eingriff und kann sich also an dieser Schnecke 8 durch Selbsthemmung abstützen. Während des normalen Motorbetriebes wird also das Hohlrad 4 durch diese Schnecke 8 über seine Außenverzahnung 7 festgehalten.

Treten nun im Antriebs- und Abtriebsbereich der Welle 3 unterschiedliche Gegenkräfte auf, führt dies über das Hohlrad 4 und dessen Außenverzahnung zu einer axialen Verstellung der Schnecke 8 und somit der diese aufweisenden Schneckenwelle 9, die ein geringes axiales Spiel aufweist. Diese Schneckenwelle 9 ist dabei für einen Handradantrieb gedacht,denn bei einer Verdrehung dieser Schneckenwelle 9 und somit der Schnecke 8 kann das Hohlrad 4 verdreht werden und damit wiederum die Welle 3 entsprechend beaufschlagt werden. Dies kann vor allem in den seltenen Fällen eines Motorschadens oder bei Stromausfall erforderlich sein.

In der Zeichnung erkennt man, daß an dieser für den Handradantrieb dienenden, die Schnecke 8 aufweisenden Schneckenwelle 9 eine membranartige Scheibe 10 in axialer Richtung festliegend angeordnet ist, die aus hartem Werkstoff bestehen kann und die mit ihrem in radialer Richtung von der Schneckenwelle 9 und der dortigen Befestigung - mit Hilfe eines Axiallagers 11 auf der einen Seite und einer an einem zweiten Axiallager 12 abgestützten Büchse 13 andererseits - abliegenden Außenumfang ebenfalls in axialer Richtung festliegend abgestützt und fixiert ist.

Diese einerseits an der Schneckenwelle 9 und andererseits an ihrem Außenumfang festliegende Scheibe 10 ist dabei auf einer Seite mit zumindest einem Dehnungsmeßstreifen 14 versehen. Auf der gegenüberliegenden Seite erkennt man eine ringförmig umlaufende Aussparung 15, durch welche die membranartige Verformbarkeit der Scheibe 10 zwischen ihrer inneren und ihrer äußeren Einspannstelle verbessert wird.

Auf einfache Weise ist die membranartige Scheibe 10 mit ihrem Außenumfang an der Innenseite des Getriebegehäuses 16 für den Handantrieb gehalten. Dies geschieht im Ausführungsbeispiel dadurch, daß der in radialer Richtung äußere Abstützbereich der membranartigen Scheibe 10 nach einer axialen Seite hin an einem Absatz 17 an der Gehäuseinnenseite abgestützt ist und auf der in axialer Richtung gegenüberliegenden Seite durch eine in das Gehäuse 16 eingeschobene Büchse 18 beaufschlagt wird, die ihrerseits im Gehäuse 16 in axialer Richtung fixiert wird. In der gewählten Darstellung ist der das Gehäuse 16 abschließende Deckel 19 von der durch ihn zu verschließenden Öffnung 20 abgehoben dargestellt. Man erkennt jedoch trotzdem, daß die die membranartige Scheibe 10 festlegende Büchse 18 in axialer Richtung mit einem an diesem Deckel 19 befindlichen Anschlag 21 festgelegt ist, wenn der Deckel 19 seine Gebrauchsstellung einnimmt. Da der Deckel 19 lösbar ist, könnte auch die Büchse 18 gelöst werden und ist zum Beispiel für Reparaturen im Bereich des Handantriebes oder der Scheibe 10 gut zugänglich.

Die Schneckenwelle 9 hat ein in ihrer axialen Erstreckungsrichtung wirkendes Spiel, ist jedoch mit der membranartigen Scheibe 10 spielfrei und fest verbunden. Treten nun entsprechende Kräfte oder Gegenkräfte auf und werden über das Hohlrad 4 auf die Schnecke 8 übertragen, an welcher sich das Hohlrad 4 abstützt, führt dies zu entsprechenden geringfügigen axialen Bewegungen an der Schneckenwelle 9, die ihrerseits die Scheibe 10 membranartig verformen. Dabei genügen geringste Verformungen, um entsprechende Meßwerte über den oder die Dehnungsmeßstreifen 14 zu ergeben. Somit kann das Spiel der Schneckenwelle 9 in Axialrichtung im Mikrometerbereich liegen, dennoch aber eine gute direkte Messung von auftretenden Kräften und damit Drehmomenten erfolgen.

Der oder die Dehnungsmeßstreifen 14 sind auf die Scheibe 10 aufgedruckt und eingebrannt und mit einer Auswerteelektronik verbunden. Man erkennt in der Zeichnung, daß die Scheibe 10 auf der Seite, auf welcher die Dehnungsmeßstreifen 14 angeordnet sind, einen Sockel 22 als elektrisches Verbindungselement trägt, welcher seinerseits parallel zu der Scheibe 10 eine Platine 23 mit einer integrierten Verstärkerschaltung festhält. Diese Platine 23 mit der Verstärkerschaltung befindet sich also in geringem Abstand parallel zu der Scheibe 10 und somit benötigt diese gesamte Meßanordnung nur äußerst wenig Platz.

Zu dem schon erwähnten Handradantrieb gehört ein Handrad 24, welches in Drehrichtung mit der Schneckenwelle 9 kuppelbar ist, dabei aber in axialer Richtung dennoch entkoppelt bleibt. Dies wird dadurch erreicht, daß das Handrad 24 mit einem ihm zugehörigen Wellenstummel 25 verbunden oder gekuppelt ist, der mit einem eigenen Lager 26 einschließlich Axiallager in einem Gehäuseteil, im Ausführungsbeispiel im Gehäusedeckel 19, drehbar gelagert ist. An seinem der Stirnseite der Schneckenwelle 9 zugewandten Ende hat dieser Wellenstummel 25 eine Klauenkupplung zum formschlüssigen Verbinden mit der Schneckenwelle 9 in Drehrichtung. Die Schneckenwelle 9 hat ihrerseits an ihrer dem Handrad 24 zugewandten Stirnseite einen in radialer Richtung verlaufenden Schlitz 27, wobei im Ausführungsbeispiel dieser Schlitz 27 an einem zusätzlich mit der Schneckenwelle 9 gekuppelten, im Inneren hohlen Klauenkupplungsteil 28 angeordnet ist. Der Wellenstummel 25 des Handrades 24 trägt einen ihn in radialer Richtung überragenden Querstift 29 oder einen sonstigen radial vorstehenden Vorsprung, welcher in Kupplungsposition in Drehrichtung formschlüssig in den erwähnten Schlitz 27 des Kupplungskörpers 28 eingreift, aber in dieser Gebrauchsstellung von dem Wellenstummel 25 abgewandten Schlitzende 27a einen axialen Abstand einhält.

Wird der Deckel 19 aus der in der Zeichnung dargestellten demontierten Position in Gebrauchsstellung gebracht und werden dabei die zum Verbinden dieses Deckels 19 mit dem Gehäuse 16 vorgesehenen Befestigungsschrauben 30 eingedreht und angezogen, erhält der Querstift 29 die beschriebene Kupplungsposition, bei welcher er in den Schlitz 27 des Klauenkupplungskörpers eingreift, so daß eine Drehbewegung des Handrades 24 auf die Schneckenwelle 9 übertragen werden kann, ohne daß ein axialer Druck auf das Handrad 24 sich in die Schneckenwelle 9 und damit auf die Scheibe 10 fortsetzt.

In vorteilhafter Weise enthält also der Gehäusedeckel 19 zum Abschluß des Handradantriebes und dessen Gehäuses 16 gleichzeitig die Lagerstelle für den mit dem Handrad 24 verbundenen Wellenstummel 25 und an der Innenseite des Deckels 19 kann die Klauenkupplung gegenüber diesem Deckel vorstehen, die bei in Gebrauchsstellung befindlichem verschlossenem Getriebedeckel 19 mit der Schneckenwelle 9 über die mit ihr verbundene Gegenkupplung 28 in Eingriff ist. Dabei erkennt man noch, daß zwischen diesem Kupplungskörper 28, der auf dem Ende der Schneckenwelle 9 drehfest und in axialer Richtung festliegend angebracht ist, und der Büchse 13 das schon erwähnte Axiallager 12 sitzt. Diese beidseits der Scheibe 10 und ihrer Haltebüchse 13 befindlichen Axiallager 11 und 12 ermöglichen die problemlose Relativdrehung der Schneckenwelle 9 gegenüber der in axialer und in Dreh-Richtung festliegenden Scheibe 10, so daß der Handradantrieb trotz dieser an ihm angeordneten Meßscheibe 10 zum Verdrehen des Hohlrades 4 und des Getriebes 2 benutzt werden kann, ohne die Meßscheibe 10 zu gefährden.

In der Zeichnung ist noch angedeutet; daß die membranartige Scheibe 10 an ihrem abgestützten und gehalterten Außenumfangsbereich eine Kunststoffeinbettung oder -ummantelung 31 aufweist. Dadurch können in diesem Bereich auftretende Ungenauigkeiten oder Toleranzen eliminiert werden und ferner kann dieser Bereich gegen eindringende Verschmutzungen geschützt werden, so daß mit einer langen Lebensdauer der Meßanordnung gerechnet werden kann. In vorteilhafter Weise erhält dabei der Handantrieb und die zu ihm gehörende Schneckenwelle 9 eine zusätzliche Funktion, die dauernd wirksam ist, weil über sie die von dem Getriebe 2 aufgenommenen Gegenkräfte und Änderungen der Gegenkräfte an der Scheibe 10 umgesetzt und mit einer Auswerteelektronik als Meßwerte erkennbar gemacht werden können, ohne daß die Anordnung von großen abgefederten Verschiebewegen abhängig ist.

Die Antriebseinheit mit einem Motor und einem Getriebe 2 dient zur Steuerung und Regelung von Armaturen oder dergleichen, beispielsweise von Ventilen, Schiebern oder Klappen. Das Getriebe 2 ist dabei zwischen dem Motor und einer solchen Armatur angeordnet und enthält für die gewünschte Untersetzung wenigstens ein Hohlrad 4 mit Innenverzahnung 5. Dieses Hohlrad 4 hat außerdem eine Verzahnung 7 an seiner Außenseite, die so ausgelegt ist, daß es mit einer Schnecke 8 eines Handradantriebes zusammenwirken kann. Mit dieser Schnecke 8 befindet sich das Hohlrad 4 in ständigem Eingriff, stützt sich also bei normalem Motorbetrieb durch Selbsthemmung an der stillstehenden Schnecke 8 ab. An dieser Schneckenwelle 9 ist eine membranartige Scheibe 10 aus hartem Werkstoff in axialer Richtung festliegend angeordnet, gegenüber welcher sich die Schneckenwelle 9 jedoch drehen läßt. Diese Scheibe 10 ist außerdem mit ihrem Außenumfang ebenfalls in axialer Richtung festliegend abgestützt und trägt auf wenigstens einer Seite zumindest einen Dehnungsmeßstreifen 14, der mit einer Auswerteelektronik verbunden ist. Wird durch Änderungen der Drehmomente und Gegenkräfte im Getriebe 2 die Schneckenwelle 9 aufgrund entsprechender Änderungen der Abstützkräfte des Hohlrades 4 in axialer Richtung geringfügig gemäß einem im Mikrometerbereich liegenden Spiel verschoben, ergibt sich über den Dehnungsmeßstreifen 14 eine entsprechende Meßwertänderung.

## Patentansprüche

1. Antriebseinheit (1) mit einem Motor und einem Getriebe (2) zur Steuerung und Regelung von Armaturen oder dergleichen, beispielsweise von Ventilen, Schiebern oder Klappen, wobei das Getriebe (2) zwischen dem Motor und der Armatur angeordnet ist und wenigstens ein Hohlrad (4) mit Innenverzahnung (5) aufweist, das durch eine Verzahnung (7) auf seiner Außenseite auch als Schneckenrad zum Zusammenwirken mit einer Schnecke (8) eines Handradantriebes ausgebildet ist, mit dieser Schnecke (8) in ständigem Eingriff steht und sich an dieser Schnecke (8) durch Selbsthemmung abstützt beziehungsweise während des Motorbetriebes festgehalten ist, **dadurch gekennzeichnet**, daß an der für den Handradantrieb vorgesehenen, die Schnecke (8) tragenden Schneckenwelle (9) eine membranartige Scheibe (10) aus hartem Werkstoff in axialer Richtung an dieser festliegend angeordnet ist, wobei die Scheibe (10) mit ihrem in radialer Richtung von der Schneckenwelle (9) und der dortigen Befestigung abliegenden Außenumfang ebenfalls in axialer Richtung festliegend abgestützt oder fixiert ist, und daß auf wenigstens einer Seite der membranartigen Scheibe zumindest ein Dehnungsmeßstreifen (14) appliziert ist.

2. Antriebseinheit nach Anspruch 1, dadurch gekennzeichnet, daß die membranartige Scheibe (10) mit ihrem Außenumfang an der Innenseite des Getriebegehäuses (16) für den Handantrieb gehalten ist.

3. Antriebseinheit nach Anspruch 1 oder 2, dadurch gekennzeichnet, daß die Schneckenwelle (9) für den Handradantrieb ein in ihrer axialen Erstreckungsrichtung wirkendes Spiel hat und mit der membranartigen Scheibe (10) spielfrei und fest verbunden ist.

4. Antriebseinheit nach Anspruch 3, dadurch gekennzeichnet, daß das Spiel der Schneckenwelle (9) in Axialrichtung im Mikrometerbereich liegt.

5. Antriebseinheit nach einem der Ansprüche 1 bis 4, dadurch gekennzeichnet, daß der oder die Dehnungsmeßstreifen (14) auf die Scheibe (10) aufgedruckt und eingebrannt und mit einer Auswerteelektronik verbunden sind.

6. Antriebseinheit nach einem der Ansprüche 1 bis 5, dadurch gekennzeichnet, daß die Scheibe (10) auf der Seite, auf welcher der oder die Dehnungsmeßstreifen (14) angeordnet sind, einen Sockel (22) oder dergleichen elektrisches Verbindungselement trägt, welches seinerseits eine Platine (23) mit einer integrierten Verstärkerschaltung hält, die parallel zu der Scheibe (10) in geringem Abstand zu dieser angeordnet ist.

7. Antriebseinheit nach einem der Ansprüche 1 bis 6, dadurch gekennzeichnet, daß das Handrad (24) in Drehrichtung mit der Schneckenwelle (9) kuppelbar und in Gebrauchsstellung verbunden, in axialer Richtung jedoch entkoppelt ist.

8. Antriebseinheit nach Anspruch 7, dadurch gekennzeichnet, daß das Handrad (24) mit einem ihm zugehörigen Wellenstummel (25) verbunden oder gekuppelt ist, der mit einem eigenen Lager (26) einschließlich Axiallager an einem Gehäuseteil oder dergleichen drehbar gelagert ist und an seinem der Schneckenwelle (9) zugewandten Ende eine Klauenkupplung zum formschlüssigen Verbinden mit der Schneckenwelle (9) in Drehrichtung aufweist.

9. Antriebseinheit nach Anspruch 7 oder 8, dadurch gekennzeichnet, daß die Schneckenwelle (9) stirnseitig wenigstens einen in radialer Richtung verlaufenden Schlitz (27) und der Wellenstummel (25) des Handrades (24) einen Querstift (29) oder radial vorstehenden Vorsprung oder dergleichen aufweist, welcher in Kupplungsposition in Drehrichtung formschlüssig in diesen Schlitz (27) eingreift, aber von dem ihm abgewandten Schlitzende einen axialen Abstand hat.

10. Antriebseinheit nach einem der Ansprüche 1 bis 9, dadurch gekennzeichnet, daß die membranartige Scheibe (10) an ihrem abgestützten und gehalterten Außenumfangsbereich eine Kunststoffeinbettung oder -ummantelung (31) aufweist.

11. Antriebseinheit nach einem der Ansprüche 1 bis 10, dadurch gekennzeichnet, daß der in radialer Richtung äußere Abstützbereich der membranartigen Scheibe (10) nach einer axialen Seite hin an einem Absatz (17) an der Gehäuseinnenseite abgestützt ist und auf der in axialer Richtung gegenüberliegenden Seite durch eine in das Gehäuse (16) eingeschobene Büchse (18) beaufschlagt ist, die ihrerseits im Gehäuse (16) in axialer Richtung fixiert ist.

12. Antriebseinheit nach einem der Ansprüche 1 bis 11, dadurch gekennzeichnet, daß die die membranartige Scheibe (10) festlegende Büchse (18) durch einen in axialer Richtung mit einem Anschlag (21) oder dergleichen in Gebrauchsstellung an ihr anliegenden Deckel des Gehäuses lösbar und/oder zugänglich festgelegt ist.

13. Antriebseinheit nach einem der Ansprüche 7 bis 12, dadurch gekennzeichnet, daß der Gehäusedeckel (19) zum Abschluß des Handradantriebes gleichzeitig die Lagerstelle für den mit dem Handrad (24) verbundenen Wellenstummel (25) enthält und an der Innenseite dieses Deckels (19) die Klauenkupplung gegenüber diesem Deckel vorsteht, die bei in Gebrauchsstellung befindlichem verschlossenem Getriebedeckel (19) mit der Schneckenwelle (9) und deren Gegenkupplung (28) im Eingriff ist.

14. Antriebseinheit nach einem der Ansprüche 1 bis 13, dadurch gekennzeichnet, daß die Scheibe (10) auf ihrer dem Dehnungsmeßstreifen (14) abgewandten Seite eine insbesondere ringartig umlaufende Aussparung (15) hat.

## Claims

1. A drive assembly (1) with a motor and a gearing (2) for controlling or regulating fittings or the like, by way of example valves, slide valves or check valves, wherein the gearing (2) is arranged between the motor and the fitting and has at least one internal geared wheel (4), wherein said internal geared wheel by means of external teeth (7) also takes the form of a worm wheel for co-operating with a worm (8) of a handwheel drive, is in constant mesh with said worm (8) and is supported at said worm (8) through irreversibility and is arrested during motor operation, **characterized in that** a diaphragm-like disc (10) of hard material is arranged so as to be fixed in the axial direction on the worm shaft (9) which is provided for the handwheel drive and carries the worm (8), the diaphragm-like disc (10) with the outer periphery thereof remote in the radial direction from the worm shaft (9) and from the fixation there likewise being supported fast or being fixed in the axial direction, and that at least one strain gauge (14) is applied to at least one side of the diaphragm-like disc.

2. A drive assembly as claimed in claim 1, characterized in that the diaphragm-like disc (10) is held with the outer periphery thereof at the inside of the gear case (16) for the hand drive.

3. A drive assembly as claimed in claim 1 or claim 2, characterized in that the worm shaft (9) for the handwheel drive has axial play and is connected to the diaphragm-like disc (10) firmly and so as to be free from play.

4. A drive assembly as claimed in claim 3, characterized in that the axial play of the worm shaft (9) is in the micrometre range.

5. A drive assembly as claimed in any one of claims 1 to 4, characterized in that the strain gauge(s) (14) are imprinted on the disc (10) and burnt in and are connected to an electronic evaluator.

6. A drive assembly as claimed in any one of claims 1 to 5, characterized in that the disc (10) carries, on the side on which the strain gauge(s) (14) are arranged, a pedestal (22) or like electric connecting element which for its part holds a board (23) with an integrated amplifying circuit, said board being arranged parallel to and closely spaced from the disc (10).

7. A drive assembly as claimed in any one of claims 1 to 6, characterized in that the handwheel (24) is adapted to be coupled to the worm shaft (9) in the direction of rotation and in the position of use is connected, but decoupled in the axial direction.

8. A drive assembly as claimed in claim 7, characterized in that the handwheel (24) is connected or coupled to an associated shaft stub (25) rotatably mounted with a separate bearing (26) including thrust bearing at a case portion or the like, said shaft stub having at the end thereof facing the worm shaft (9) a claw clutch for positive connection to the worm shaft (9) in the direction of rotation.

9. A drive assembly as claimed in claim 7 or claim 8, characterized in that the worm shaft (9) has on the face at least one slot (27) running in a radial direction and the shaft stub (25) of the handwheel (24) has a transverse pin (29) or radially protruding projection or the like, the latter positively engaging with said slot (27) in the coupling position in the direction of rotation, but being at an axial distance from the slot end averted therefrom.

10. A drive assembly as claimed in any one of claims 1 to 9, characterized in that the diaphragm-like disc (10) has at its supported and retained outer peripheral zone a plastic embedding or sheathing (31).

11. A drive assembly as claimed in any one of claims 1 to 10, characterized in that the radially outer supporting area of the diaphragm-like disc (10) is supported towards one axial side on a shoulder (17) at the casing interior and applied to said supporting area at the opposite side in the axial direction is a bush (18) which is inserted in the casing (16) and is for its part fixed in the axial direction in the casing (16).

12. A drive assembly as claimed in any one of claims 1 to 11, characterized in that the bush (18) locating the diaphragm-like disc (10) is located so as to be detachable and/or accessible by a casing cover which in the position of use bears thereagainst in the axial direction with a stop (21) or the like.

13. A drive assembly as claimed in any one of claims 7 to 12, characterized in that the casing cover (19) for enclosure of the handwheel drive simultaneously contains the bearing for the shaft stub (25) connected to the handwheel (24) and at the inside of said cover (19) the claw clutch projects relative to said cover and is in engagement with the worm shaft (9) and counter-coupling (28) thereof when the gear cover (19) is closed in the position of use.

14. A drive assembly as claimed in any one of claims 1 to 13, characterized in that the disc (10) has on the side thereof averted from the strain gauge (14) a recess (15), particularly one running round it in a ring-like manner.

## Revendications

1. Unité d'entraînement (1) avec un moteur et un mécanisme de transmission (2) pour commander et régler des appareils de robinetterie ou analogues, par exemple des soupapes, tiroirs ou clapets, le mécanisme de transmission (2) étant disposé entre le moteur et l'appareil de robinetterie et présentant au moins une couronne (4) qui est pourvue d'une denture intérieure (5) et qui, par une denture (7) sur son côté extérieur, est également conçue comme roue à vis pour coopérer avec une vis sans fin (8) d'un entraînement par volant à main, est en prise constante avec cette vis sans fin (8) et s'appuie contre cette vis sans fin (8) par auto-blocage ou encore est maintenue bloquée pendant le fonctionnement du moteur, **caractérisée** en ce qu'un disque (10) du genre membrane, en matériau dur, est disposé sur l'arbre de vis (9) prévu pour l'entraînement par volant à main et portant la vis sans fin (8), le disque (10) étant axialement fixé en position sur cet arbre et étant, par sa périphérie extérieure radialement éloignée de l'arbre de vis (9) et de la fixation sur cet arbre, également axialement fixé en position ou soutenu en position axialement fixe, et en ce qu'au moins une jauge extensométrique (14) est appliquée sur au moins un côté du disque du genre membrane.

2. Unité d'entraînement selon la revendication 1, **caractérisée** en ce que le disque (10) du genre membrane est maintenu par sa périphérie extérieure contre la face intérieure du boîtier de transmission (16) pour l'entraînement par volant à main.

3. Unité d'entraînement selon la revendication 1 ou 2, **caractérisée** en ce que l'arbre de vis (9) pour l'entraînement par volant à main possède un jeu actif dans sa direction de développement axial et est assemblé fixement et sans jeu au disque (10) du genre membrane.

4. Unité d'entraînement selon la revendication 3, **caractérisée** en ce que le jeu de l'arbre de vis (9) en direction axiale se situe dans la plage micrométrique.

5. Unité d'entraînement selon l'une des revendications 1 à 4, **caractérisée** en ce que la ou les jauges extensométriques (14) sont imprimées et marquées à chaud sur le disque (10) et reliées à une unité électronique d'évaluation.

6. Unité d'entraînement selon l'une des revendications 1 à 5, **caractérisée** en ce que le disque (10) porte, sur le côté sur lequel sont disposées la ou les jauges extensométriques (14), un culot (22) ou élément de liaison électrique analogue, qui porte lui-même une plaquette (23) à circuit amplificateur intégré qui est disposée parallèlement au disque (10) et à faible distance de ce dernier.

7. Unité d'entraînement selon l'une des revendications 1 à 6, **caractérisée** en ce que le volant à main (24) peut être couplé en rotation à l'arbre de vis (9) et lui est relié en position d'utilisation, mais en est axialement désaccouplé.

8. Unité d'entraînement selon la revendication 7, **caractérisée** en ce que le volant à main (24) est couplé ou relié à un bout d'arbre (25), qui lui est associé et qui, par un propre palier (26) comprenant des éléments de palier à charge axiale, est monté à rotation sur un élément de boîtier ou similaire et présente, à son extrémité tournée vers l'arbre de vis (9), un accouplement à clabot pour le couplage en rotation avec l'arbre de vis (9) par complémentarité de forme.

9. Unité d'entraînement selon la revendication 7 ou 8, **caractérisée** en ce que l'arbre de vis (9) présente sur son côté frontal au moins une fente (27) s'étendant en direction radiale, et le bout d'arbre (25) du volant à main (24) présente une goupille transversale (29) ou une saillie radiale ou similaire qui, en position d'accouplement, s'engage en rotation dans cette fente (27) par complémentarité de forme mais est axialement distante de l'extrémité opposée de la fente.

10. Unité d'entraînement selon l'une des revendications 1 à 9, **caractérisée** en ce que le disque (10) du genre membrane présente, sur sa région périphérique extérieure qui est soutenue et maintenue, une incorporation ou un enrobage de matière plastique (31).

11. Unité d'entraînement selon l'une des revendications 1 à 10, **caractérisée** en ce que la région d'appui radialement extérieure du disque (10) du genre membrane s'appuie, sur un côté axial, sur un décrochement (17) prévu sur la face intérieure du boîtier et, sur le côté axialement opposé, est sollicitée par une douille (18) qui est enfilée dans le boîtier (16) et est elle-même axialement fixée en position dans le boîtier (16).

12. Unité d'entraînement selon l'une des revendications 1 à 11, **caractérisée** en ce que la douille (18) fixant en position le disque (10) du genre membrane est fixée en position, avec possibilité de démontage et/ou d'accès, par un couvercle du boîtier qui, en position d'utilisation, s'applique contre elle en direction axiale par une butée (21) ou similaire.

13. Unité d'entraînement selon l'une des revendications 7 à 12, **caractérisée** en ce que le couvercle de boîtier (19) destiné à fermer le mécanisme d'entraînement par volant à main contient simultanément le palier pour le bout d'arbre (25) relié au volant à main (24), et l'accouplement à clabot, qui est en engagement avec l'arbre de vis (9) et son élément d'accouplement complémentaire (28) lorsque le couvercle (19) est fermé en position d'utilisation, dépasse du couvercle (19) sur le côté intérieur de ce dernier.

14. Unité d'entraînement selon l'une des revendications 1 à 13, **caractérisée** en ce que le disque (10) possède un évidement (15) sur son côté opposé à la jauge extensométrique (14), notamment un évidement qui en fait annulairement le tour.
